(19) **Europäisches Patentamt**

**European Patent Office**

**Office européen des brevets**

(11) **EP 1 148 250 B1**

(12) **FASCICULE DE BREVET EUROPEEN**

(45) Date de publication et mention
de la délivrance du brevet:
**16.06.2004 Bulletin 2004/25**

(51) Int Cl.⁷: **F15B 9/09**, G05B 19/46

(21) Numéro de dépôt: **01400901.3**

(22) Date de dépôt: **06.04.2001**

(54) **Dispositif de commande d'un actionneur**

Steuervorrichtung eines Stellglieds

Device for controlling an actuator

(84) Etats contractants désignés:
**CH DE FR GB IT LI**

(30) Priorité: **18.04.2000 FR 0004981**

(43) Date de publication de la demande:
**24.10.2001 Bulletin 2001/43**

(73) Titulaire: **Crouzet Automatismes
26000 Valence (FR)**

(72) Inventeur: **Hilaire, Jean-François,
Thomson-CSF PIDB
94117 Arcueil Cedex (FR)**

(74) Mandataire: **Guérin, Michel et al
THALES Intellectual Property,
31-33 avenue Aristide Briand
94117 Arcueil Cédex (FR)**

(56) Documents cités:
**EP-A- 0 111 016          WO-A-97/11414
WO-A-98/44267**

## Description

L'invention se rapporte à un dispositif de commande d'un actionneur.

L'invention est décrite en rapport à un vérin pneumatique double effet utilisé comme actionneur, mais il est bien entendu que l'invention peut être mise en oeuvre quel que soit le type d'actionneur comme par exemple un vérin hydraulique, qu'il soit simple ou double effet.

Il est connu de commander un vérin pneumatique double effet au moyen d'un distributeur comportant quatre orifices et trois états couramment appelé distributeur 4-3. Une consigne, par exemple électrique, est convertie en air comprimé servant à déplacer les tiroirs du distributeur par exemple au moyen d'un dispositif de conversion connu sous le nom de dispositif buse-palette. Dans un tel dispositif, la consigne électrique traverse un électroaimant susceptible de déplacer une palette obstruant ou non, suivant l'état de la consigne, une buse alimentée par une source d'air comprimé.

On emploie couramment dans l'industrie un niveau de consigne électrique délivrant un courant compris entre 4 et 20 milliampères sous une tension de l'ordre de 10 à 30 Volts. Avec un dispositif buse-palette, l'énergie électrique de la consigne est directement convertie en air comprimé sans qu'il soit nécessaire d'apporter une énergie supplémentaire pour effectuer la conversion. Les dispositifs buse-palette ont une faible précision et consomment une grande quantité d'air comprimé à cause d'une fuite d'air quasiment permanente existant au niveau de la buse.

Pour pallier les inconvénients des dispositifs buse-palette on a réalisé la conversion au moyen d'électrovannes monostables. Ces électrovannes sont beaucoup plus précises que les dispositifs buse-palette mais l'énergie délivrée par la consigne électrique n'est pas suffisante pour manoeuvrer les électrovannes. Les électrovannes classiques nécessitent une puissance électrique de l'ordre d'un Watt pour être manoeuvrées. Pour ce faire, on utilise des moyens d'amplifications de la consigne, moyens alimentés par une source de tension électrique extérieure par exemple de 24 Volts.

A cause de cette source de tension extérieure on ne peut pas remplacer directement un dispositif buse-palette par des moyens de conversion comportant des électrovannes monostables. De plus l'alimentation par la source de tension extérieure empêche d'obtenir une homologation en sécurité intrinsèque. Plus précisément, il est possible d'utiliser un système homologué en sécurité intrinsèque dans une ambiance explosive sans qu'une enveloppe antidéflagrante ne soit nécessaire et la source de tension extérieure impose une telle enveloppe antidéflagrante.

De récent développement dans le domaine des électrovannes ont permis d'éviter le recours à une source de tension extérieure en utilisant des électrovannes piézo-électriques qui peuvent être commandées directement par une consigne comprise entre 4 et 20 milliampères. En revanche les électrovannes piézo-électriques présentent un certain nombre d'inconvénients comme notamment leurs prix beaucoup plus élevées que les électrovannes monostables classiques et leur faible déplacement limitant ainsi le débit d'air qu'elles sont susceptibles de commuter et par conséquent leur capacité à déplacer un tiroir de distributeur.

L'invention a pour but de pallier ces différents inconvénients en proposant un dispositif de commande d'un actionneur beaucoup plus précis et consommant moins d'air qu'un dispositif buse-palette et n'utilisant ni source de tension extérieure ni électrovanne piézoélectrique.

Pour atteindre ce but, l'invention a pour objet un dispositif de commande d'un actionneur piloté par un distributeur comportant des moyens pour obtenir différents états du distributeur, caractérisé en ce que les moyens pour obtenir différents états du distributeur sont activés au moyen d'au moins une électrovanne fluidique bistable à laquelle on applique une consigne et en ce que le dispositif de commande comporte des moyens pour s'assurer de la réponse de l'électrovanne en fonction de la consigne sur l'ensemble du domaine que peut couvrir l'actionneur.

Les moyens pour obtenir différents états du distributeur comportent classiquement des tiroirs linéaires. Il est possible de remplacer ces tiroirs linéaires par exemple par des tiroirs rotatifs, par des vérins, par des clapets susceptibles d'obturer des buses. Pour simplifier la suite de la description on utilisera le terme tiroir pour désigner des moyens pour obtenir différents états du distributeur quel que soit le mode de réalisation de ces moyens.

L'invention sera mieux comprise et d'autres avantages apparaîtront à la lecture de la description détaillée d'un mode de réalisation, mode de réalisation illustrée par le dessin joint dans lequel :

- la figure 1 représente un dispositif de commande d'un actionneur ;
- la figure 2 représente le dispositif de la figure 1, comportant de plus, des moyens pour s'assurer de la réponse de l'électrovanne en fonction de la consigne sur l'ensemble du domaine que peut couvrir l'actionneur ;
- la figure 3 représente un exemple de signal de commande d'un actionneur, représenté sous forme de chronogramme ;
- la figure 4 représente un exemple de synoptique de fonctionnement des moyens pour s'assurer de la réponse de l'électrovanne en fonction de la consigne sur l'ensemble du domaine que peut couvrir l'actionneur ;
- la figure 5 représente un mode de réalisation d'un dispositif de commande d'un actionneur ;
- les figures 6a à 6d représentent différents signaux, sous forme de chronogrammes, illustrant le fonctionnement du dispositif de commande d'un actionneur ;

- la figure 7 représente un vérin simple effet commandé par un distributeur 4 - 3 ;
- la figure 8 représente un vérin simple effet commandé par deux distributeurs 2 - 2.

Par soucis de simplification de la description, les mêmes repères topologiques représenteront les mêmes éléments dans les différentes figures.

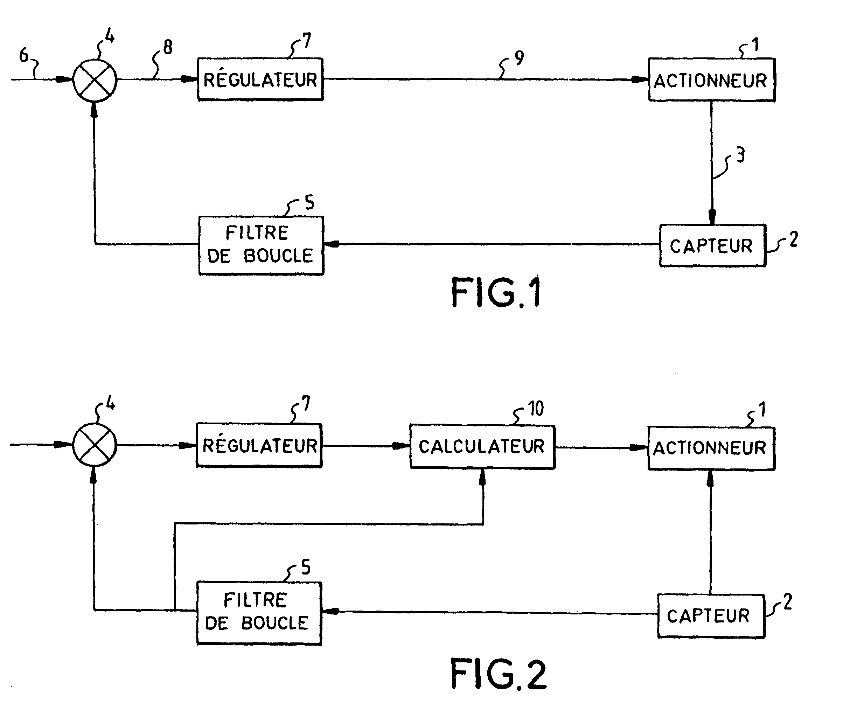

A la figure 1, l'actionneur 1 est par exemple un vérin pneumatique travaillant en translation. La position d'un arbre de sortie de l'actionneur 1 est mesurée au moyen d'un capteur 2. Dans la suite de la description la position de l'arbre de sortie sera appelée grandeur de sortie de l'actionneur 1. La mesure réalisée par le capteur 2 est représentée sur la figue 1 au moyen de la flèche 3. Le capteur 2 délivre une information représentative de la grandeur de sortie de l'actionneur 1. Cette information est acheminée vers un comparateur 4. Avantageusement l'information délivrée par le capteur 2 est filtrée au moyen d'un filtre de boucle 5 située entre le capteur 2 et le comparateur 4. Le filtre de boucle 5 permet notamment d'éviter certaines instabilités du dispositif de commande de l'actionneur 1.

Le comparateur 4 reçoit également une consigne représentative de la position souhaitée pour l'actionneur 1. Le comparateur 4 compare la consigne à l'information représentative de la grandeur de sortie de l'actionneur 1 issue du capteur 2. Le résultat de la comparaison est fourni à un régulateur 7 sous forme d'un signal d'erreur 8. Le régulateur 7 commande l'actionneur 1 en fonction du signal d'erreur 8. Le signal de commande de l'actionneur 1 porté par la flèche 9 est par exemple proportionnel au signal d'erreur 8. Il est également possible de commander l'actionneur 1 en fonction de l'évolution du signal d'erreur 8 par exemple en fonction de sa dérivée et/ou en fonction de son intégrale. Ce type de régulateur est bien connu dans la littérature sous le nom de régulateur PID (Proportionnel Integral Dérivé). Le régulateur 7 commande l'actionneur 1 au moyen d'un distributeur commandé par un tiroir. Le tiroir est déplacé au moyen d'une électrovanne pneumatique commandée par le régulateur 7. Sur la figure 1 le distributeur et l'électrovanne ne sont pas représentés.

Afin que l'asservissement de la position de l'actionneur 1, asservissement réalisé au moyen du capteur 2, du comparateur 4 et du régulateur 7, ait une bonne sensibilité, le régulateur 7 régule réellement la position de l'actionneur 1 uniquement sur une bande de réglage relativement étroite. La bande de réglage est définie par le fait que la valeur que peut prendre le signal d'erreur 8 en valeur absolue reste inférieure à une valeur limite. En dehors de cette bande de réglage, le régulateur 7 est saturé.

De plus, au voisinage immédiat de la valeur zéro pour le signal d'erreur 8, le régulateur ne produit aucun signal de commande. Ce voisinage est dénommé bande morte. L'amplitude de la bande morte est très inférieure à l'amplitude de la bande de réglage. L'existence de cette bande morte permet de maintenir en position l'actionneur 1 sans fonctionnement intempestif des électrovannes lorsque l'erreur est sensiblement nulle.

La figure 2 reprend les mêmes éléments que la figure 1, à savoir l'actionneur 1, le capteur 2, le filtre de boude 5, le comparateur 4 et le régulateur 7. La figure 2 comporte de plus des moyens pour s'assurer de la réponse de l'électrovanne en fonction de la consigne sur l'ensemble du domaine que peut couvrir l'actionneur. Ces moyens comportent un calculateur 10 qui est susceptible de modifier la commande de l'actionneur 1, commande issue du régulateur 7. Le calculateur 10 reçoit également une information relative à la grandeur de sortie de l'actionneur 1. Cette information est par exemple prélevée en sortie du filtre de boucle 5.

Avantageusement les moyens pour s'assurer de la réponse de l'électrovanne comporte des moyens pour répéter cycliquement le signal de commande de l'actionneur 1. Une électrovanne bistable peut en effet avoir une position incertaine. En effet, une électrovanne bistable comporte généralement un électroaimant comprenant un aimant permanent dans son circuit magnétique. L'aimant permanent assure une première position stable qui peut être maintenue même en l'absence d'alimentation électrique de l'électroaimant. Une deuxième position stable est obtenue part exemple au moyen d'un ressort ou bien au moyen d'un deuxième circuit électromagnétique. L'électrovanne bistable fonctionne de façon à ce qu'une impulsion électrique suffise pour passer de la première position stable à la deuxième. L'énergie minimale nécessaire pour passer d'une position stable à l'autre peut varier en fonction de nombreux paramètres notamment la résistance de la bobine de l'électroaimant ou encore de la température de l'électrovanne. Des variations de température peuvent entraîner une incertitude quant à la position de l'électrovanne. L'incertitude peut également être due à des rebonds d'une position sur l'autre. Le fait de répéter cycliquement le signal de commande de l'actionneur 1 permet de limiter l'incertitude sur la position de l'électrovanne.

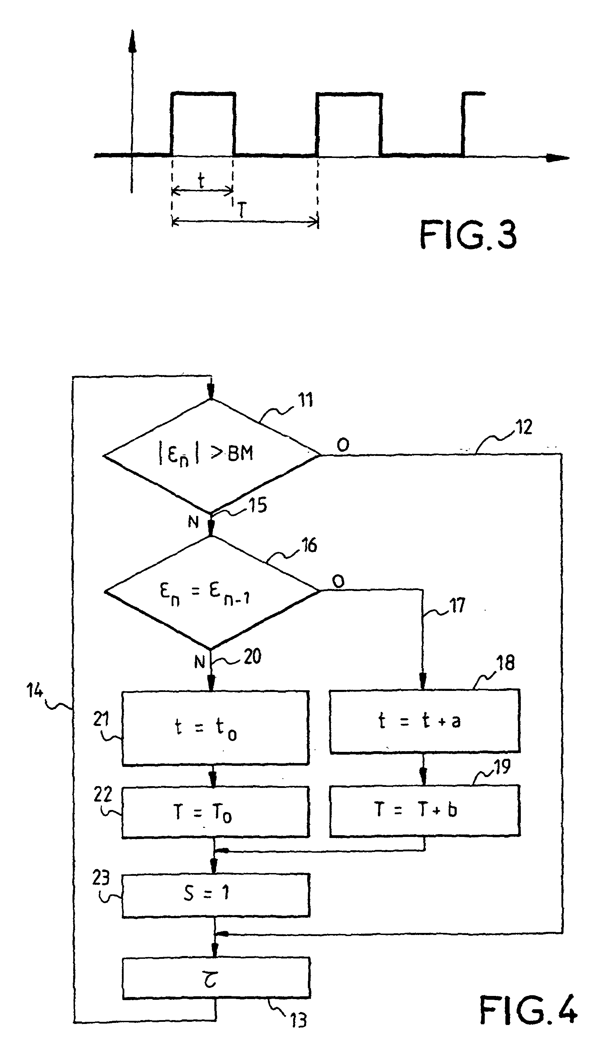

La figure 3 illustre, sous forme d'un chronogramme, la répétition cyclique du signal de commande de l'actionneur 1. Sur cette figure le temps est représenté en abscisse et l'amplitude du signal de commande en ordonné. Le signal de commande est par exemple un signal sensiblement rectangulaire de période T. Durant une première partie t de la période T l'amplitude du signal de commande est suffisante pour activer l'électrovanne bistable. Et durant le reste de la période T le signal de commande est nul. La première partie t représente la largeur de l'impulsion du signal de commande.

La figure 4 représente un exemple de synoptique de fonctionnement des moyens pour s'assurer de la réponse de l'électrovanne. Le synoptique est représenté sous forme d'un organigramme . Lors d'une première étape 11, on effectue une comparaison permettant de déterminer si le signal d'erreur 8 à un instant donné est compris ou non dans la bande morte. L'étape de comparaison 11 est notée de la façon suivante :

$$|\varepsilon_n| < B\,M$$

Dans cette notation $|\varepsilon_n|$ représente le signal d'erreur mesuré en valeur absolue pour un cycle considéré. La valeur absolue de $\varepsilon_n$ est comparée à BM représentant la valeur maximale que peut prendre le signal d'erreur en valeur absolue dans la bande morte. Lorsque le signal d'erreur est compris dans la bande morte, on sort de l'étape de comparaison par la flèche 12 notée 0 sur la figure 3 jusqu'à atteindre une étape de temporisation 13. L'étape de temporisation 13 est notée $\tau$ sur la figure 3. A l'issu de l'étape 13 on recommence de nouveau l'étape de comparaison 11. L'enchaînement de l'étape 13 vers l'étape 11 est représenté au moyen de la flèche 14, on recommence ainsi un cycle suivant.

Lorsque le signal d'erreur $\varepsilon_n$ n'est pas compris dans la bande morte, on sort de l'étape 11 par la flèche 15 notée N pour entrer dans une nouvelle étape de comparaison 16. L'étape de comparaison 16 compare la valeur du signal d'erreur au cycle considéré avec la valeur du signal d'erreur au cycle précédent c'est à dire avant la temporisation $\tau$. Sur la figure 4 l'étape de comparaison 16 est notée de la façon suivante :

$$\varepsilon_n = \varepsilon_{n-1}$$

où $\varepsilon_n$ représente la valeur du signal d'erreur au cycle considéré et $\varepsilon_{n-1}$ représente la valeur du signal d'erreur au cycle précédent. La comparaison réalisée à l'étape 16 permet de savoir si l'électrovanne bistable a effectivement changé de position.

Si le résultat de la comparaison réalisé à l'étape 16 est que le signal d'erreur $\varepsilon$ est resté inchangée, c'est à dire que l'électrovanne bistable n'a pas été commandé correctement, on sort de l'étape 16 par la flèche 17 notée 0. On effectue ensuite les étapes 18 et 19. A l'étape 18 la largeur d'impulsion t est augmenter d'une valeur a et à l'étape 19 la période du signal de commande T est augmenté d'une valeur b. Pour améliorer la probabilité d'un déplacement de l'électrovanne bistable il suffit d'augmenter la largeur d'impulsion t. Néanmoins on combine avantageusement les étapes 18 et 19 afin de conserver sensiblement constante l'énergie moyenne véhiculé dans le signal de commande.

Si au contraire le résultat de la comparaison réalisé à l'étape 16 nous renseigne sur un déplacement de l'électrovanne, c'est à dire une modification du signal d'erreur $\varepsilon$, on sort de l'étape 16 par la flèche 20 notée N. On entre ensuite dans l'étape 21 suivie de l'étape 22. A l'étape 21 la largeur d'impulsion t est ramenée à une valeur initiale $t_0$ et à l'étape 22 la période du signal de commande est ramenée à une valeur initiale $T_0$. A l'issue des étapes 22 ou 19, on envoie une impulsion du signal de commande vers l'actionneur 1, impulsion de largeur t. Cette impulsion est réalisée à l'étape 23, cette étape est notée S = 1, S représentant le signal de commande. A l'issue de l'étape 23 on rentre dans l'étape 13 de temporisation pour ensuite revenir à l'étape 11 de comparaison. Il est bien entendu que l'étape 23 n'interviendra pas de nouveau tant qu'une période complète T ne se soit écoulée.

Avantageusement, la durée de l'étape de temporisation 13 notée $\tau$ est fonction de la valeur courante T de la période du signal de commande.

Avantageusement, lorsque le signal d'erreur $\varepsilon$ est situé sensiblement au centre de la bande morte, il est nécessaire de déplacer le tiroir 30 et 31 pendant un temps supérieur à un temps de cycle, par exemple de l'ordre de deux à trois fois le temps de cycle. Ainsi lorsque le signal d'erreur $\varepsilon$ est dans la bande morte mais que le tiroir n'est pas remis à sa position inactive à la première impulsion 0 délivrée à l'électrovanne correspondante, on attend au moins une deuxième impulsion 0 avant de mettre en oeuvre les étapes 18 et 19 tendant à augmenter la largeur d'impulsion t et le temps de cycle T. En d'autres termes, la correction de largeur d'impulsion n'intervient pas au premier défaut de commande d'une électrovanne. On attend qu'un éventuel défaut se répète avant de corriger la largeur d'impulsion t.

Les valeurs initiales de la largeur d'impulsion $t_0$ et de la période T du signal de commande peuvent être fixées à la fabrication du dispositif. Mais avantageusement, on peut prévoir une autoadaptation de la largeur d'impulsion initiale $t_0$ pour tenir comporte des réactions réelles du dispositif. Si aucune correction n'est effectuée sur grand nombre de cycles, on peut réduire légèrement la valeur initiale $t_0$. Si au contraire à chaque fois que l'on revient à la valeur initiale $t_0$, on constate la nécessité d'une correction, on augmente légèrement cette valeur initiale $t_0$.

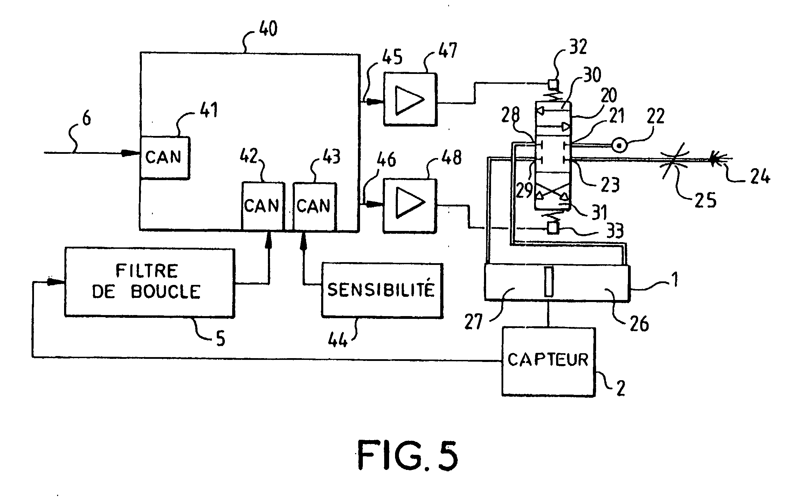

Le dispositif de commande de l'actionneur 1 représenté figure 5 comporte un distributeur 4-3 portant le repère 20. Un premier orifice 22 du distributeur 20 est relié à une source d'air comprimé 22. Un second orifice 23 du distributeur 20 est relié à des moyens d'échappement 24 par exemple au travers d'une restriction 25. L'actionneur 1 est dans ce mode de réalisation particulier un vérin double effet. Le vérin comporte deux chambres 26 et 27. La première chambre 26 est reliée à un troisième orifice 28 du distributeur 20 et la deuxième chambre 27 est relié à un quatrième orifice 29 du distributeur 20. Le distributeur 20 comporte deux tiroirs 30 et 31. Le tiroir 30 permet de relier la source d'air comprimée 22 à l'orifice 28 et, les moyens d'échappement 24 à l'orifice 22. Le deuxième tiroir 31 permet de relier la source d'air comprimée 22 à l'orifice 29 et, les moyens d'échappement 24 à l'orifice 28. Le tiroir 30 peut être manoeuvré au moyen d'une électrovanne bistable 32 et le tiroir 31 au moyen d'une électrovanne bistable 33. Le vérin pneumatique 1 travaille par exemple en translation et le capteur 2 mesure ta position d'un arbre de sortie du vérin 1. La position de l'arbre de sortie du vérin pneumatique est la grandeur de sortie de l'actionneur 1 cette grandeur de sortie est délivrée à l'entrée d'un filtre de boucle 5.

Le filtre de boucle 5 permet notamment d'éviter notamment certaines instabilités du dispositif de commande. Il peut permettre en outre de régler la position zéro du capteur 2. Le filtre de boucle peut également permettre de régler le gain de la grandeur de sortie de sorte que le capteur 2 puisse mesurer l'ensemble de la course du vérin pneumatique 1.

Les fonctions réalisées par le comparateur 4, le régulateur 7 et le calculateur 10 sont par exemple réalisées par un microcontrolleur 40. Le microcontrolleur 40 reçoit la consigne 6 au moyen d'un convertisseur analogique-numérique 41. Le microcontrolleur 40 comporte un second convertisseur analogique-numérique 42 recevant le signal issu du filtre de boucle 5. Le microcontrolleur 40 est également apte à recevoir à travers un troisième convertisseur analogique-numérique 43 une information extérieure permettant le réglage de la sensibilité du dispositif. Les moyens d'entrées du réglage de la sensibilité portent le repère 44. Ce réglage de la sensibilité permet par exemple de régler la largeur de la bande morte et/ou celle de la bande de réglage. Les moyens d'entrée 44 sont analogiques. A titre de variante, les moyens d'entrée peuvent être numérique et comporter un clavier. Dans cette variante il n'est pas nécessaire d'utiliser le convertisseur analogique-numérique 43. Cette variante peut également être appliquée la consigne 6 permettant ainsi de se passer du convertisseur analogique-nupérique 41. Le microcontrolleur 40 comporte deux sorties 45 et 46 permettant chacune de commander les électrovannes 32 et 33 par exemple au travers d'amplificateurs 47 et 48.

L'alimentation électrique du microcontrolleur 40 n'a pas été représentée sur la figure 5. Cette alimentation prélève son énergie sur la consigne 6. Avantageusement les amplificateurs 47 et 48 comportent également des moyens pour emmagasiner l'énergie entre les impulsions t. Ces moyens comportent par exemple des condensateurs.

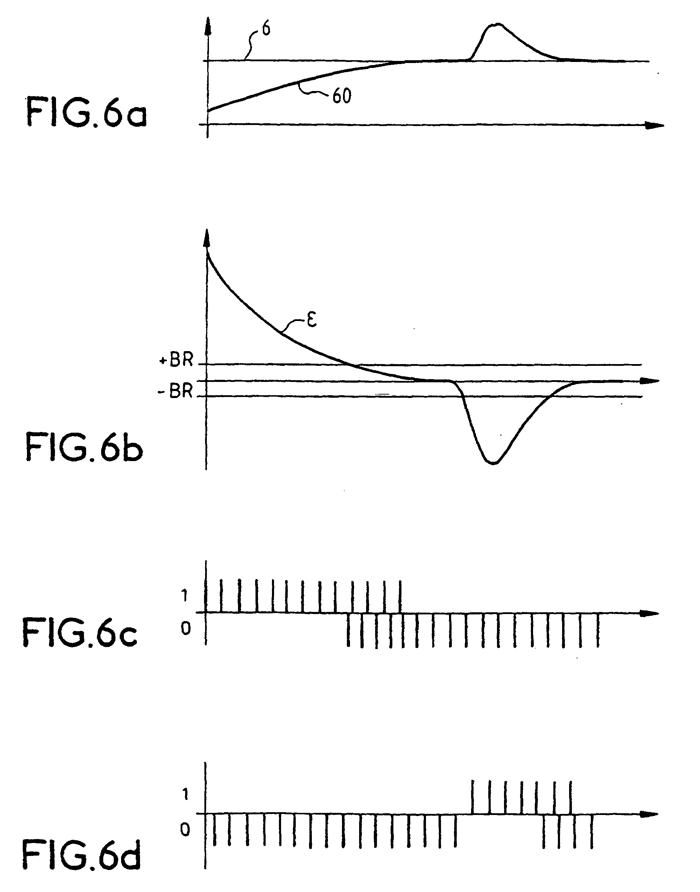

Les figures 6a à 6d représentent différents signaux sous forme de chronogrammes illustrant le fonctionnement du dispositif de commande. Le temps est représenté en abscisse à la même échelle pour l'ensemble de ces chronogrammes.

La figure 6a représente l'évolution dans le temps de la position du vérin par rapport à la consigne 6 qui est ici constante dans le temps. La position du vérin suit une courbe 60 qui est tout d'abord situé bien en dessous de la consigne 6. Ensuite la courbe 60 se rapproche de la consigne 6 jusqu'à être confondue avec elle. Ensuite la courbe 60 s'éloigne brutalement de la consigne 6. Cet éloignement brutal peut par exemple être dû à un coup de bélier sur l'arbre de sortie de l'actionneur 1. Ensuite la courbe 60 se rapproche à nouveau de la consigne 6.

La figure 6b représente l'évolution dans le temps du signal d'erreur ε. L'amplitude de la bande de réglage est comprise entre - BR et + BR. La largeur de la bande morte étant très inférieure à celle de la bande de réglage, la bande morte est confondu avec l'axe des temps. Le signal d'erreur ε suit l'évolution de la position du vérin défini par la courbe 60.

Les courbes 6c et 6d représentent les signaux de commande de chacune des électrovannes 32 et 33 représentées à la figue 5. Sur ces figures chaque trait vertical représente schématiquement une impulsion du signal de commande. Les impulsions situées au-dessus de l'axe des temps représentent des impulsions de commande permettant de mettre chaque tiroir dans un état dit actif entre les différents orifices du distributeur 20. Les impulsions situées au-dessous de l'axe des temps permettent de remettre le tiroir en position inactive dans un état dit inactif.

La figure 6c représente le signal de commande de l'électrovanne 32 permettant de relier la chambre 26 à la source d'air comprimée 22. La figure 6d représente le signal de commande de l'électrovanne 33 permettant de relier la chambre 26 aux moyens d'échappement 24. Pour faciliter la lecture des figures 6c et 6d, les impulsions nécessaires à mettre le tiroir correspondant dans un état actif, situées au-dessus de l'axe des temps, sont notées 1, et les impulsions du signal de commande permettant au tiroir correspondant de revenir à un état inactif sont notées 0.

A la figure 6c tant que le signal d'erreur ε n'est pas compris dans la bande de réglage des impulsions 1 sont répétées cycliquement. Ensuite lorsque le signal d'erreur ε rentre à l'intérieur de la bande de réglage on a à la fois des impulsions 1 et des impulsions 0. La répartition au cours d'une période d'une impulsion 1 et d'une impulsion 0 est réalisée par exemple selon la stratégie de commande en modulation de largeur d'impulsions. Plus tard lorsque le signal d'erreur ε dépasse la bande morte pour devenir négatif ou nul on ne conserve alors que des impulsions 0.

De façon analogue à la figure 6d, tant que le signal d'erreur ε est positif le signal de commande ne comporte que des impulsions 0. Ensuite lorsque, suite au coup de bélier, le signal d'erreur ε devient fortement négatif le signal de commande comporte une suite d'impulsion 1. Plus tard lorsque le signal d'erreur ε se rapproche de 0 en entrant dans la bande de réglage on n'a une suite d'impulsions 1 coordonnées avec des impulsions 0 de manière à rapprocher doucement le signal d'erreur ε d'une valeur nulle.

Une fois que le signal d'erreur ε atteint la bande morte les signaux de commande de chacune des électrovannes 32 et 33 ne comporte plus que des impulsions 0.

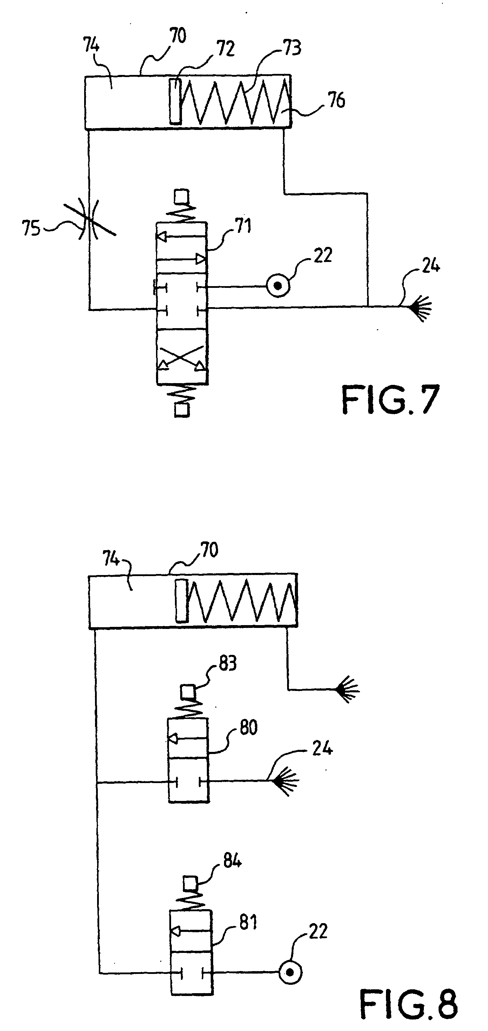

La figure 7 représente le circuit pneumatique de commande d'un vérin simple effet 70 commandé par un distributeur 4-3 71. Le vérin 70 comporte un piston 72 un ressort 73 ainsi qu'une chambre 74. Le ressort 73 tant à réduire le volume de la chambre 74. Le distributeur 71 fonctionne de façon analogue au distributeur 20 représenté à la figure 5. Il permet avec ses deux tiroirs de relier la chambre 74 soit à une source d'air comprimée 22 soit à des moyens d'échappement 24. La chambre 74 est reliée au distributeur 71 au travers d'une restriction 75. Une autre chambre 76 du vérin pneumatique 70 dans laquelle est située le ressort 73 est en permanence reliée aux moyens d'échappement 75. Le vérin pneumatique 70 peut tout aussi bien être commandé au moyen d'un dispositif conforme à l'invention.

La figure 8, représente également un vérin pneumatique simple effet 70 commandé cette fois ci au moyen de deux distributeurs 80 et 81. Les distributeurs 80 et 81 sont des distributeurs 2-2. C'est à dire qu'ils comportent deux orifices et leurs tiroirs sont susceptibles de se déplacer entre deux états. Chacun des distributeurs est commandé par une électrovanne 83 ou 84. Le distributeur 80 permet de relier la chambre 74 aux moyens d'échappement 24 et le distributeur 81 permet de relier cette même chambre 74 à la source d'air comprimée 22. Ici encore le vérin 70 et les distributeurs 80 et 81 peuvent être commandés par un dispositif conforme à l'invention.

## Revendications

1. Dispositif de commande d'un actionneur (1) piloté par un distributeur (20 ; 71 ; 80, 81) comportant des moyens (30, 31) pour obtenir différents états du distributeur, **caractérisé en ce que** les moyens (30, 31) pour obtenir différents états du distributeur sont activés au moyen d'une électrovanne (32, 33) fluidique bistable à laquelle on applique une consigne (6) et **en ce que** le dispositif de commande comporte des moyens (10) pour s'assurer de la réponse de l'électrovanne en fonction de la consigne (6) sur l'ensemble du domaine que peut couvrir l'actionneur (1 ).

2. Dispositif selon la revendication 1, **caractérisé en ce qu'**il comporte un capteur (2) délivrant une information représentative de la grandeur de sortie de l'actionneur (1), un comparateur (4) recevant l'information délivrée par le capteur (2) ainsi que la consigne (6), le comparateur (2) délivrant un signal d'erreur (8, ε), un régulateur (7) recevant le signal d'erreur (8, ε) et délivrant un signal de commande (9) de l'actionneur (1).

3. Dispositif selon l'une des revendications précédentes, **caractérisé en ce que** les moyens (10) pour s'assurer de la réponse de l'électrovanne en fonction de la consigne comportent des moyens pour répéter cycliquement le signal de commande de l'actionneur (1 ).

4. Dispositif selon la revendication 3, **caractérisé en ce que** les moyens pour répéter cycliquement le signal de commande peuvent former le signal de commande sous forme d'une impulsion de largeur initiale ($t_o$) donnée, impulsion répétée avec une période initiale ($T_o$) donnée, et peuvent augmenter la largeur (t) de l'impulsion lorsque le capteur (2) n'a pas détecté de changement de grandeur de sortie de l'actionneur (1 ).

5. Dispositif selon la revendication 4, **caractérisé en ce que** lorsque le capteur (2) a détecté un changement de grandeur de sortie de l'actionneur (1), la largeur (t) de l'impulsion est ramenée à la largeur initiale ($t_o$).

6. Dispositif selon l'une quelconque des revendications 4 ou 5, **caractérisé en ce que** les moyens pour répéter cycliquement le signal de commande peuvent augmenter à la fois la largeur (t) de l'impulsion et la période (T) du signal de façon à conserver sensiblement constante l'énergie moyenne véhiculée dans le signal de commande, l'augmentation de la largeur (t) et de la période (T) intervenant lorsque le capteur (2) n'a pas détecté de changement de grandeur de sortie de l'actionneur (1 ).

7. Dispositif selon la revendication 6, **caractérisé en ce que** lorsque le capteur (2) a détecté un changement de grandeur de sortie de l'actionneur (1 ), la période (T) est ramenée à la période initiale ($T_o$).

8. Dispositif selon l'une quelconque des revendications 4 à 7, **caractérisé en ce que** la largeur d'impulsion initiale ($t_o$) est adaptée en fonction du nombre de fois que la largeur d'impulsion (t) a été augmentée pendant un grand nombre de cycle du signal de commande (9).

9. Dispositif selon l'une quelconque des revendications 4 à 8, **caractérisé en ce que** lorsque le signal d'erreur (ε) est compris dans une bande morte (BM), le signal de commande (9) tend à un déplacement nul de l'actionneur (1), et **en ce que** les moyens (30, 31) pour obtenir différents états du distributeur doivent être maintenus dans une position active pendant un temps supérieur à la période (T) du cycle du signal de commande (9) pour que le signal d'erreur (ε) sorte de la bande morte (BM).

## Patentansprüche

1. Steuervorrichtung für ein Stellglied (1), das von einem Verteiler (20; 71; 80, 81) gesteuert wird, mit Mitteln (30, 31), um verschiedene Zustände des Verteilers zu erhalten, **dadurch gekennzeichnet, dass** die Mittel (30, 31) zum Erhalt verschiedener Zustände des Verteilers mittels eines bistabilen fluidischen Elektroventils (32, 33) aktiviert werden, an das ein Sollsignal (6) angelegt wird, und dass die Steuervorrichtung Mittel (10) aufweist, um sich der Reaktion des Elektroventils in Abhängigkeit vom Sollsignal (6) auf der Gesamtheit des vom Stellglied (1) abdeckbaren Gebiets zu vergewissern.

2. Vorrichtung nach Anspruch 1, **dadurch gekennzeichnet, dass** sie einen Sensor (2), der eine für die Ausgangsgröße des Stellglieds (1) repräsentative Information liefert, einen Komparator (4), der die vom Sensor (2) gelieferte Information sowie das Sollsignal (6) empfängt, wobei der Komparator (2) ein Fehlersignal (8, ε) liefert, und einen Regler (7) aufweist, der das Fehlersignal (8, ε) empfängt und ein Steuersignal (9) für das Stellglied (1) liefert.

3. Vorrichtung nach einem der vorhergehenden Ansprüche, **dadurch gekennzeichnet, dass** die Mittel (10), um sich der Reaktion des Elektroventils in Abhängigkeit vom Sollsignal zu vergewissern, Mittel aufweisen, um das Steuersignal des Stellglieds (1) zyklisch zu wiederholen.

4. Vorrichtung nach Anspruch 3, **dadurch gekennzeichnet, dass** die Mittel zur zyklischen Wiederholung des Steuersignals das Steuersignal in Form eines Impulses mit einer gegebenen Ursprungsbreite ($t_0$) formen können, wobei der Impuls mit einer gegebenen Ursprungsperiode ($T_0$) wiederholt wird, und die Breite (t) des Impulses vergrößern können, wenn der Sensor (2) keine Veränderung der Ausgangsgröße des Stellglieds (1) festgestellt hat.

5. Vorrichtung nach Anspruch 4, **dadurch gekennzeichnet, dass**, wenn der Sensor (2) eine Veränderung der Ausgangsgröße des Stellglieds (1) festgestellt hat, die Breite (t) des Impulses auf die Ursprungsbreite ($t_0$) zurückgeführt wird.

6. Vorrichtung nach einem der Ansprüche 4 oder 5, **dadurch gekennzeichnet, dass** die Mittel zur zyklischen Wiederholung des Steuersignals sowohl die Breite (t) des Impulses als auch die Periode (T) des Signals vergrößern können, um die im Steuersignal transportierte mittlere Energie im Wesentlichen konstant zu halten, wobei die Vergrößerung der Breite (t) und der Periode (T) auftritt, wenn der Sensor (2) keine Veränderung der Ausgangsgröße des Stellglieds (1) festgestellt hat.

7. Vorrichtung nach Anspruch 6, **dadurch gekennzeichnet, dass**, wenn der Sensor (2) eine Änderung der Ausgangsgröße des Stellglieds (1) festgestellt hat, die Periode (T) auf die Ursprungsperiode ($T_0$) zurückgeführt wird.

8. Vorrichtung nach einem der Ansprüche 4 bis 7, **dadurch gekennzeichnet, dass** die Ursprungsbreite ($t_0$) des Impulses in Abhängigkeit davon angepasst wird, wie oft die Impulsbreite (t) während einer großen Anzahl von Zyklen des Steuersignals (9) vergrößert wurde.

9. Vorrichtung nach einem der Ansprüche 4 bis 8, **dadurch gekennzeichnet, dass**, wenn das Fehlersignal (ε) in einem Totbereich (BM) liegt, das Steuersignal (9) zu einer Verschiebung Null des Stellglieds (1) neigt, und dass die Mittel (30, 31), um verschiedene Zustände des Verteilers zu erhalten, während eines Zeitraums in einer aktiven Stellung gehalten werden müssen, der größer ist als die Periode (T) des Zyklus des Steuersignals (9), damit das Fehlersignal (ε) aus dem Totbereich (BM) austritt.

## Claims

1. Device for controlling an actuator (1) controlled by a directional control valve (20; 71; 80, 81) comprising means (30, 31) for obtaining various states of the directional control valve, **characterized in that** the means (30, 31) for obtaining various states of the directional control valve are activated by means of a bistable fluid solenoid valve (32, 33) to which a setpoint signal (6) is applied and **in that** the control device includes means (10) for ascertaining the response of the solenoid valve to the setpoint signal (6) over the entire range that the actuator (1) may cover.

2. Device according to Claim 1, **characterized in that** it includes a sensor (2) that delivers information representative of the output magnitude of the actuator (1), a comparator (4) that receives the information delivered by the sensor (2) and the setpoint signal (6), the comparator (2) that delivers an error signal (8, ε) and a regulator (7) that receives the error signal (8, ε) and delivers a signal (9) for controlling the actuator (1).

3. Device according to either of the preceding claims, **characterized in that** the means (10) for ascertaining the response of the solenoid valve to the setpoint signal comprise means for cyclically repeating the control signal for the actuator (1).

4. Device according to Claim 3, **characterized in that** the means for cyclically repeating the control signal may form the control signal in the form of a pulse of given initial width ($t_0$), which pulse is repeated with a given initial period ($T_0$), and may increase the width (t) of the pulse when the sensor (2) has not detected a change in magnitude of the output of the actuator (1).

5. Device according to Claim 4, **characterized in that** when the sensor (2) has detected a change in magnitude of the output of the actuator (1), the width (t) of the pulse is reduced to the initial width (to).

6. Device according to either of Claims 4 and 5, **characterized in that** the means for cyclically repeating the control signal may increase both the width (t) of the pulse and the period (T) of the signal so as to keep the mean energy conveyed in the control signal approximately constant, the increase in the width (t) and in the period (T) taking place when the sensor (2) has not detected a change in magnitude of the output of the actuator (1).

7. Device according to Claim 6, **characterized in that** when the sensor (2) has detected a change in magnitude of the output of the actuator (1), the period (T) is reduced to the initial period ($T_0$).

8. Device according to any one of Claims 4 to 7, **characterized in that** the initial pulse width ($t_0$) is tailored according to the number of times that the pulse width (t) has been increased during a large number of cycles of the control signal (9).

9. Device according to any one of Claims 4 to 8, **characterized in that** when the error signal ($\varepsilon$) lies within a dead band (DB), the control signal (9) tends towards a zero displacement of the actuator (1) and **in that** the means (30, 31) for obtaining various states of the directional control valve must be kept in an active position during a time longer than the period (T) of the cycle of the control signal (9) in order for the error signal ($\varepsilon$) to depart from the dead band (DB).

FIG.1

FIG.2

EP 1 148 250 B1

FIG.3

FIG.4

FIG.5

EP 1 148 250 B1

FIG.6a

FIG.6b

+BR
-BR

FIG.6c

1
0

FIG.6d

1
0

FIG.7

FIG.8